# EUROPEAN PATENT SPECIFICATION

(11) **EP 2 798 212 B1**
(45) Date of publication and mention of the grant of the patent: **16.06.2021**
(21) Application number: 12809199.8
(22) Date of filing: 13.12.2012
(51) Int. Cl.: F04B 7/00, F04B 39/10, F16K 3/02, F16K 3/08

(54) **ROTARY VALVES HAVING SEALING PROFILES BETWEEN STATOR AND ROTOR AND RELATED METHODS**
DREHVENTILE MIT DICHTUNGSPROFILEN ZWISCHEN STATOR UND ROTOR UND ZUGEHÖRIGE VERFAHREN
ROBINETS ROTATIFS AYANT DES PROFILÉS D'ÉTANCHÉITÉ ENTRE UN STATOR ET UN ROTOR ET PROCÉDÉS ASSOCIÉS

(30) Priority: 27.12.2011 IT MI20112396
(43) Date of publication of application: 05.11.2014
(73) Proprietor: Nuovo Pignone S.p.A., 50127 Florence (IT)
(72) Inventor: BAGAGLI, Riccardo, 50127 Florence (IT); TOGNARELLI, Leonardo, 50127 Florence (IT)
(74) Representative: Illingworth-Law, William Illingworth
(86) International application number: PCT/EP2012/075435
(87) International publication number: WO 2013/098087

(56) References cited:
- WO-A1-2009/146222
- GB-A- 2 195 395
- JP-A- 2005 214 018
- None

## Description

### BACKGROUND

### TECHNICAL FIELD

Embodiments of the subject matter disclosed herein generally relate to rotary valves used in reciprocating compressors, and, more particularly, to actuated rotary valves having sealing profiles between the stator (sometimes also called seat) and the rotor (sometimes also called counter-seat).

### DISCUSSION OF THE BACKGROUND

GB 2 195 395 A discloses a valve that can be used for controlling fluid flow in a compressor, the valve comprising a stator having a stator opening and a rotor having a rotor opening, wherein at least one of the rotor and the stator has a sealing profile extruding from a surface of the rotor or of the stator towards an interface there-between, the sealing profile surrounding a respective one of the rotor opening or the stator opening. An actuator is also provided to supply an angular displacement of an actuator stem of the valve.

Compressors used in oil and gas industry, have to meet industry specific requirements that take into consideration, for example, that the compressed fluid is frequently corrosive and flammable. American Petroleum Institute (API), the organization setting the recognized industry standard for equipment used in oil and gas industry has issued a document, API618, listing a complete set of minimum requirements for reciprocating compressors.

The compressors may be classified as positive displacement compressors (e.g., reciprocating, screw, or vane compressors) or dynamic compressors (e.g., centrifugal or axial compressors). In the positive displacement compressors, the gas is compressed by trapping a fixed volume of gas and then reducing that volume. In the dynamic compressors, the gas is compressed by transferring the kinetic energy from a rotating element (such as, an impeller) to the gas to be compressed by the compressor.

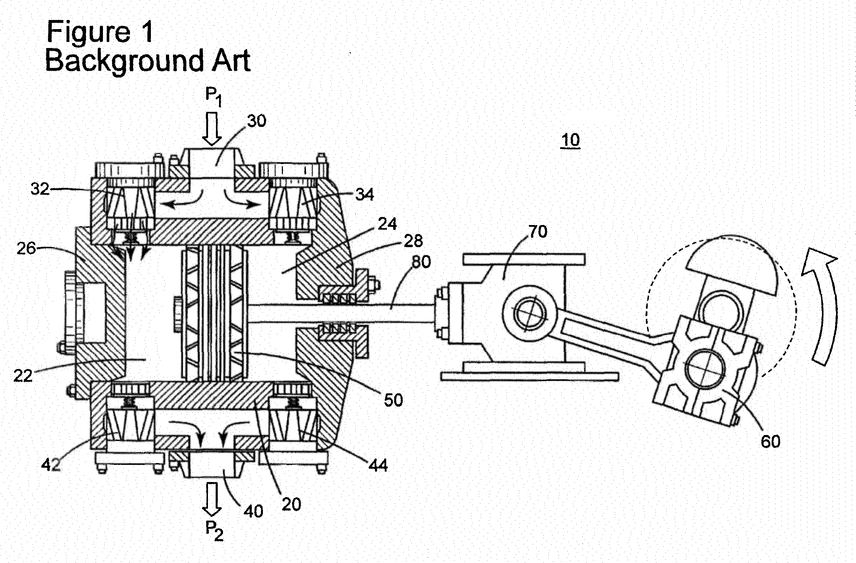

Figure 1 is an illustration of a conventional dual chamber reciprocating compressor 10 (i.e., a positive displacement compressor), which is used in oil and gas industry. The compression occurs in a cylinder 20. A fluid to be compressed (e.g., natural gas) is input into the cylinder 20 via an inlet 30, and, after the compression, it is output via an outlet 40. The compressor operates in a cyclical process during which the fluid is compressed due to a movement of the piston 50 in the cylinder 20, between a head end 26 and a crank end 28. The piston 50 divides the cylinder 20 in two compression chambers 22 and 24 operating in different phases of the cyclical process, the volume of compression chamber 22 being at its lowest value when the volume of the compression chamber 24 is at its highest value and vice-versa.

Suction valves 32 and 34 open to allow the fluid that is going to be compressed (i.e., having a first/suction pressure P₁) from the inlet 30 into the compression chambers 22 and 24, respectively. Discharge valves 42 and 44 open to allow the fluid that has been compressed (i.e., having a second/discharge pressure P₂) to be output from the compression chambers 22 and 24, respectively, via the outlet 40. The piston 50 moves due to energy transmitted from a crankshaft 60 via a crosshead 70 and a piston rod 80.

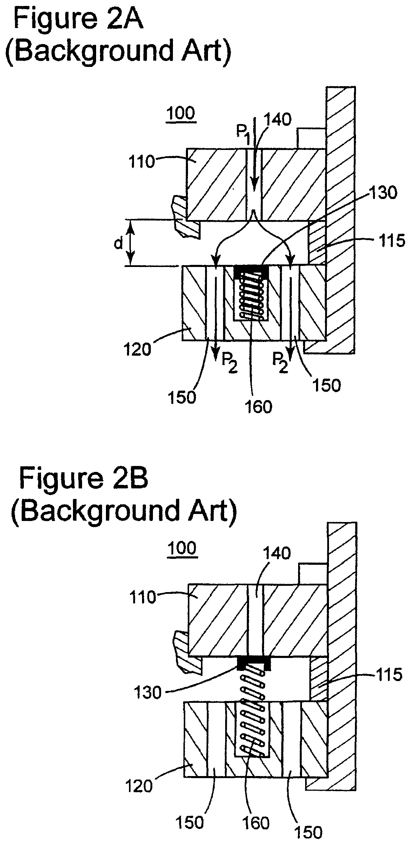

Conventionally, the suction and the compression valves used in a reciprocating compressor are automatic valves that are switched between a close state and an open state due to a differential pressure across the valve. Figures 2A and 2B illustrate the operation of an automatic valve 100 having a seat 110 and a counter-seat 120. Figure 2A illustrates the valve 100 in an open state and Figure 2B illustrates the valve 100 in a close state.

In the open state illustrated in Figure 2A, the shutter 130 is pushed down into the counter-seat 120 allowing the fluid to flow through an inlet 140 and outlets 150. The shape of the shutter 130 may be a disk, a poppet, multi-poppet or rings, which difference in shape gives the name of the valve: disk valve, poppet valve, multi-poppet valve or ring valve. Figures 2A and 2B represent a generic configuration independent of the details related to the actual shape of the shutter 130.

A spring 160 is located between the shutter 130 and the counter-seat 120. Depending on its state of deformation, the spring 160 actively participates in establishing the valve's opening point, the elastic deformation force superimposing a pressure along the flow path (the superimposed pressure being equal to the force divided by the area of the shutter 130). In the open state, the first pressure p₁ from the source of the fluid (not shown) and along the inlet 140 is larger than the pressure p₂ at the destination of the fluid (not shown) and along the outlets 150. If the spring 160 is deformed when the shutter 130 is pushed down into the counter-seat 120 (as shown in Figure 2A), the pressure difference (p₁- p₂) has to be larger than the pressure due to the spring 160 (i.e., a ratio of the elastic deformation force divided by the area of the shutter).

In the close state illustrated in Figure 2B, the shutter 130 prevents the fluid flowing from the inlet 140 towards the outlets 150. The spring 160 is often configured to favor a faster closing of the valve (and maintaining the valve closed), and, therefore, it is known as a "return" spring. The spring 160 helps closing the valve 100 even if the pressures at the source p₁ and the destination p₂ are equal (p₁= p₂).

The valves described above are known as automatic valves being switched between the open state and the close state due to the pressure difference across the valve (p₁- p₂) (i.e., between the pressure p₁ at the source of the fluid and the pressure p₂ at the destination of the fluid).

One source of inefficiency in the reciprocating compressor is related to the clearance volume, that is, a volume from which the compressed fluid cannot be evacuated. Part of the clearance volume is due to volume related to the valves. Rotary valves require less clearance volume, but operate only if actuated. Another advantage of the rotary valves is an increased flow area. Rotary valves have been known for a long time, for example, they have been described in U.S. Patent No. 4,328, 831 to Wolff and U.S. Patent 6,598,851 to Schiavone et al.

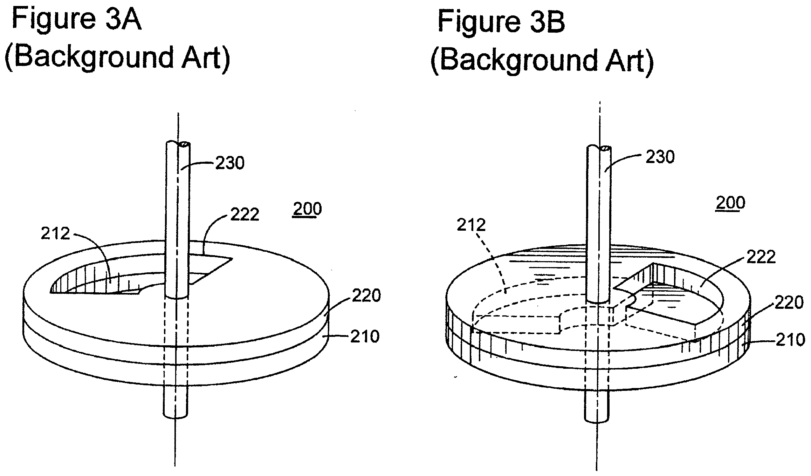

Figures 3A and 3B illustrate a conventional rotary valve 200. The valve includes a stator 210 and a rotor 220. The stator 210 and the rotor 220 are coaxial disks with openings spanning a sector of the same size around a shaft 230. The rotor 210 may be actuated to rotate around the shaft 230 from a first position (Figure 3A) in which the rotor's opening 212 overlaps the stator's opening 222 to a second position (Figure 3B) in which the rotor's opening 212 and the stator's opening 222 (shown using dashed line) span different sectors. When the rotor 220 is in the first position, the rotary valve 200 is in the open state allowing a fluid to flow from one side of the rotor stator area to another side of the rotor. When the rotor 220 is in the second position, the rotary valve 200 is in the close state preventing the fluid to flow from one side of the rotor stator area to another side of the rotor.

The conventional rotary valves are not currently used in reciprocating compressors used in oil and gas industry because the sealing between the stator and the rotor is not effective and actuation is not precise. Additionally, when actuating the rotor, high friction forces may occur due to (1) the difference of pressure pushing the rotor towards the stator and therefore increasing the friction force, and (2) the large friction surface. Moreover, static friction is likely substantially larger than the dynamic friction which difference makes it even harder to properly time and control the actuation force.

Accordingly, it would be desirable to provide valves rotary valves useable in reciprocating compressors for the oil and gas industry that avoid the afore-described problems and drawbacks.

### SUMMARY

The present invention is defined in the accompanying claims.

Some of the embodiments minimize the friction forces in rotary valves, allowing a fast and precise actuation or the valves, thereby rendering these rotary valves useable in reciprocating compressors for oil and gas industry equipment. Using rotary valves in reciprocating compressors has the advantage of an increased passage flow area yielding an increased efficiency of the compressor by enhancing the suction and/or discharge phase.

According to one exemplary embodiment, an actuated rotary valve useable in a reciprocating compressor for oil and gas industry is provided, the valve being located between a nozzle and a compression chamber of the reciprocating compressor. The valve includes (1) a stator having a stator opening there-through in a direction from the nozzle to the compression chamber, (2) an actuator stem configured to be rotated by an actuator, and (3) a rotor having a rotor opening there-through in the direction from the nozzle to the compression chamber, and being fixedly attached to the actuator stem. The rotor and the stator are coaxial disks, and are coaxial with the actuator stem passing there-through. At least one of the rotor and the stator has a sealing profile extruding from a surface of the rotor or of the stator towards an interface there-between, the sealing profile surrounding a respective one of the rotor opening or the stator opening.

According to another exemplary embodiment, a reciprocating compressor used in oil and gas industry has (1) a compression chamber configured to compress a fluid that has entered the compression chamber via a suction nozzle, and is evacuated from the compression chamber via a discharge nozzle, (2) an actuator configured to provide an angular displacement, and (3) a valve configured to prevent the fluid from flowing inside or outside the compression chamber via the suction nozzle or the discharge nozzle. The valve includes (1) a stator having a stator opening there-through in a direction from towards the compression chamber, (2) an actuator stem connected to and configured to be rotated by the actuator, and (3) a rotor having a rotor opening there-through in the direction towards the compression chamber, and being fixedly attached to the actuator stem. The rotor and the stator are coaxial disks, and are coaxial with the actuator stem passing there-through. At least one of the rotor and the stator has a sealing profile extruding from a surface of the rotor or of the stator towards an interface there-between, the sealing profile surrounding a respective one of the rotor opening or the stator opening.

According to another exemplary embodiment a method for retrofitting a reciprocating compressor used in oil and gas industry and initially having an automatic valve is provided. The method includes removing an automated valve positioned to interface a nozzle and a compression chamber of the reciprocating compressor, and fixedly attaching a stator of an actuated rotary valve in-between the nozzle and the compression chamber. The method further includes providing an actuator configured to supply an angular displacement and connecting to the actuator, an actuator stem passing through the stator and having attached a rotor.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a conventional dual chamber reciprocating compressor;
Figures 2A and 2B are schematic diagrams illustrating operation of an automatic valve;
Figures 3A and 3B are illustrations of a conventional rotary valve;
Figure 4 is a schematic diagram of a compressor including at least one rotary valve according to an exemplary embodiment;
Figure 5 is a cross-section though a rotary valve having a sealing profile between a stator and a rotor thereof, according to an exemplary embodiment;
Figures 6A and 6B illustrate are surface views of a stator and a rotor, respectively, or a rotary valve having sealing profiles according to an exemplary embodiment;
Figure 7 is a schematic diagram of a rotary valve used as a suction valve of a reciprocating compressor, according to an exemplary embodiment;
Figure 8 is a schematic diagram of a rotary valve used as a discharge valve of a reciprocating compressor; and
Figure 9 is a flow chart illustrating a method for retrofitting a compressor to have at least one rotary valve having a sealing profile between the stator and the rotor, according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims.

In some embodiments described below, actuated rotary valves having a sealing profile disposed on at least one surface at the interface between the rotor and the stator are used instead of automatic valves, in order (1) to enhance efficiency of a reciprocating compressor by decreasing the clearance volume and (2) to overcome the problems related to the high friction in rotary valves. When the rotary valves are used in reciprocating compressors, a passage flow area between inside and outside of the compressors increases. The increased passage flow area results in an increased efficiency of the compressor due to shorter and more efficient suction and/or discharge phase.

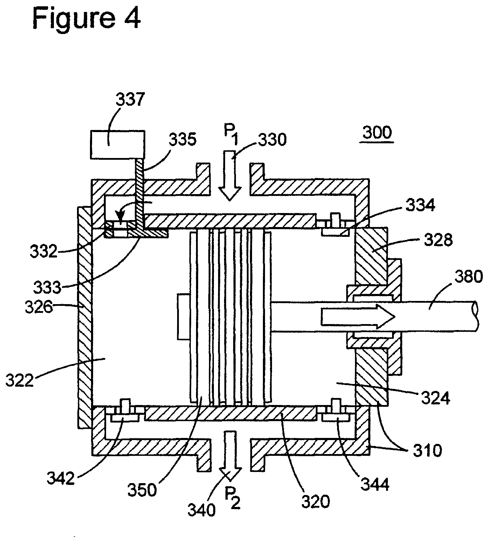

Figure 4 is a schematic representation of a reciprocating compressor 300 having one or more rotary valves with sealing profiles. The compressor 300 is a dual chamber reciprocating compressor. However, valve assemblies according to embodiments similar to the ones described hereinafter may be used also in single chamber reciprocating compressors. The compression occurs in a cylinder 320. A fluid to be compressed (e.g., natural gas) is input into the cylinder 320 via an inlet 330, and, after the compression, is output via an outlet 340. The compression occurs due to the back-and-forth movement of the piston 350 along the cylinder 320, between a head end 326 and a crank end 328. The piston 350 divides the cylinder 320 in two compression chambers 322 and 324 operating in different phases of the cyclic process, the volume of compression chamber 322 being at its lowest value when the volume of the compression chamber 324 is at its highest value and vice-versa.

Suction valves 332 and 334 open to allow the fluid that is going to be compressed (i.e., having a first pressure p₁) from the inlet 330 into the compression chambers 322 and 324, respectively. Discharge valves 342 and 344 open to allow the fluid that has been compressed (i.e., having a second pressure p₂) to be output from the compression chambers 322 and 324, respectively, via the outlet 340. The piston 350 moves due to energy received for example from a crankshaft (not shown) via a crosshead (not shown) and a piston rod 380. In Figure 4, the valves 332, 334, 342, and 344 are illustrated as being located on a lateral wall of the cylinder 320. However, the valves 332 and 342, 334 and 344, may be located on the head end 326 and/or the crank end 328 of the cylinder 320, respectively.

In contrast to an automatic valve, which is in the open state or in the close state depending on a differential pressure on opposite sides of a mobile part of the valve, an actuated rotary valve, such as 332 in Figure 3, opens when an actuator, such as 337 in Figure 4, applies a force (torque) transmitted via a shaft 335 to a mobile part (i.e., a rotor) 333 of the valve 332, thereby inducing an angular displacement of the mobile part 333. One, some or all valves of the reciprocating compressor 300 may be actuated rotary valves having a sealing profile. A combination of actuated rotary valves (having a sealing profile) and automatic valves may also occur in some embodiments. For example, in one embodiment, the suction valves may be rotary valves while the discharge valves may be automatic valves; in another embodiment, the discharge valves may be actuated rotary valves, while the suction valves may be automatic valves.

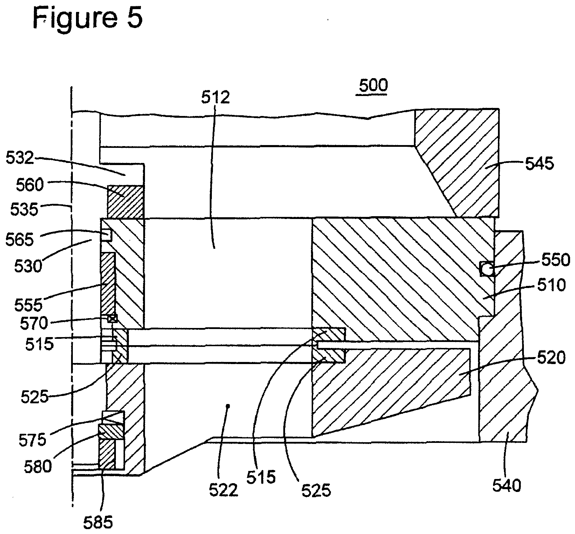

Figure 5 is a cross-section through an actuated rotary valve 500 having a sealing profile between a stator 510 and a rotor 520 thereof. The stator 510 has an opening 512 there-through and the rotor 520 has an opening 522 there-through. The rotor 520 is attached to an actuator stem 530, which rotates around an axis 535 due to a force (torque) provided by an actuator (not shown in Figure 5, e.g., 337 in Figure 4). The stator 510 is fixedly positioned between a wall 540 of the compressor's cylinder (e.g., 322 in Figure 4), a wall 545 of a nozzle (duct) leading to the valve and the actuator stem 530. The valve is opened allowing a fluid to flow from one side of the valve (e.g., the nozzle) to the other side of the valve (e.g., the compression chamber), when the opening 522 of the rotor 520 overlaps the opening 512 of the stator 510 (as shown in Figure 5). The valve is closed preventing the fluid to flow from one side of the valve (e.g., the nozzle) to the other side of the valve (e.g., the compression chamber), when the opening 522 of the rotor 520 does not overlap the opening 512 of the stator 510.

In the embodiment illustrated in Figure 5, a first sealing profile 515 is formed to protrude from the surface of the stator 510 towards the rotor 520, and a second sealing profile 525 is formed to protrude from the surface of the rotor 520 towards the stator 510. The sealing profiles 515 and 525 may be wider at an interface with the stator 510 and the rotor 520 than in a contact zone there-between. Although the rotary valve illustrated in Figure 5 has sealing profiles disposed both on the stator 510 and on the rotor 520, in another embodiment a single sealing profile may be formed and attached to one the stator 510 and the rotor 520.

The stator 510 and the rotor 520 may be made of stainless steel and alloyed steel. The sealing profiles 515 and 525 may be made of a non-metallic material such as polyether ether ketone (PEEK) or stainless steel. In one embodiment, the first sealing profile 515 and the stator 510 may be formed as a single piece and /or the second sealing profile 525 and the rotor 520 may be formed as a single piece made, for example, of stainless steel. Alternatively, the sealing profiles 515 and 525 may formed separately from (and from a different material than) the stator 510 and the rotor 520, respectively, being attached fixedly thereof. In one embodiment, a groove may be formed on a surface on which the respective sealing profile is attached, a height of the groove being smaller than a height of the respective sealing profile. The sealing profiled may be glued or welded on the respective surfaces (depending also on the material used to manufacture the sealing profiles).

In order prevent fluid from leaking between the compressor cylinder and the nozzle, a seal 550 is placed at an interface between the stator 510 and the wall 540 of the compressor's cylinder. The seal 540 may be an O-ring and may be placed in a groove carved into the body of the stator 510. Further, for the same fluid sealing purpose, a radial bushing 555 is placed between the stator 510 and the actuator stem 530.

In addition to the above described main components of the valve assembly, the actuated rotary valve 500 includes a plurality of other components provided to enhance the valve's (and/or compressor's) operation and/or as a support structure. A bushing 560 may be placed between a collar 532 of the actuator stem 530 and the stator 510. Another seal 565 of a different type and at a different location than the radial bushing 555 may be also placed between the stator 510 and the actuator stem 530. A retainer ring 570 may be placed in a groove of the stator 510 to maintain the radial bushing 555 in its intended position. A spring 575, a spacer 580 and a counter-nut 585 attached to the actuator stem 530 support and push the rotor 520 towards the stator 510.

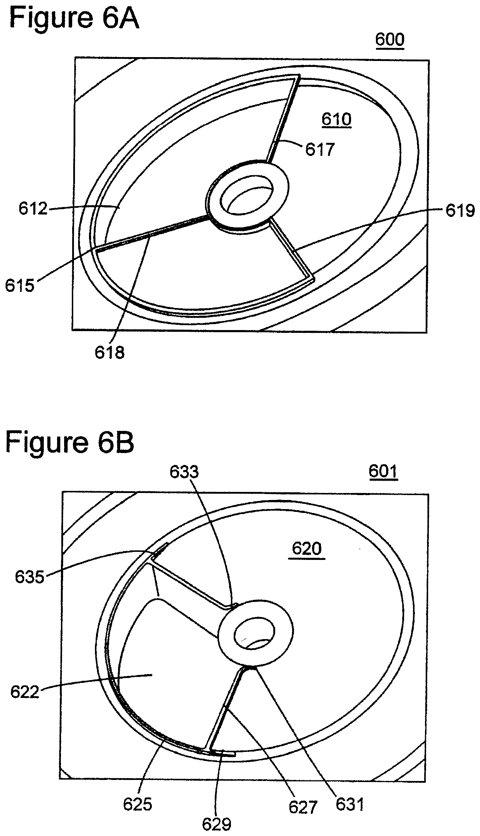

Figure 6A illustrates a surface view of a stator 610 having a sealing profile 615, and Figure 6B illustrates a surface view of a rotor 620 having a sealing profile 625. The stator 610 and the rotor 620 have openings 612 and 622, respectively. In an actuated rotary valve, when the rotor 620 is in a first position in which the rotor's opening 622 overlaps the stator's opening 612, the rotary valve is opened. When the rotor 620 is in a second position in which the rotor's opening 622 does not overlap the stator's opening 612, the rotary valve is closed.

The sealing profiles 615 and 625 protrude from the surface of the stator 610 and the rotor 620, respectively. The height of the sealing profile may be 2-3 mm. The sealing profile 615 on the surface of the stator 610 includes two adjoined similarly shaped closed perimeters 617 and 619, the first one, 617, surrounding the opening 612 through the stator 610, and the second one, 619, having a common side 618 with the first one, 617. The sealing profile 625 on the surface of the rotor 620 includes a closed perimeter 627 surrounding the opening 622 of the rotor and having substantially the same shape as the close perimeters 617 and 619, and seal extensions 629, 631, 633, and 635 circumferentially extending sides of the perimeter 627. The seal extensions 629, 631, 633, and 635 may have decreasing height (i.e., ramps down) towards the surface of the rotor 620.

In the first position, the perimeter 627 of the sealing profile 625 matches the perimeter 617 of the sealing profile 615, and, in the second position, the perimeter 627 of the sealing profile 625 overlaps the perimeter 619 of the sealing profile 615.

The reduced contact area of the rotor-stator interface using the sealing profiles to only a boundary frame with small thickness leads to a smaller friction force. When the rotor is actuated to switch from the second position to the first position, the pressure inside the compressor cylinder may still exceed the pressure in the nozzle on the other side of the rotary valve. An actuation force (or torque) has to overcome both inertia and friction. The amount of friction is proportional to the area of contact. The smaller contact area is, the smaller is the friction force. Additionally, any capillary force that may occur due to liquid adhering to the rotor-stator interface is also proportional to the contact area.

As known in the art, the static friction is larger than the dynamic friction. Thus, if friction is large, a large force has to be applied at a beginning of the actuation of the rotor. The larger is the force initially applied relative to the force applied after the rotor starts moving, the harder it becomes to control the actuation. The actuation time is few milliseconds, and the angular displacement may be up to 120°. Precise timing and range of actuation are critical for achieving a good performance of the compressor. Thus, easier, providing actuated rotary valves capable of an enhanced control renders the use of rotary valves to become an attractive technical solution for reciprocating compressors used in the oil and gas industry.

The manner of arranging rotary valves in a reciprocating compressor provides leverage for enhancing sealing while the valve is closed.

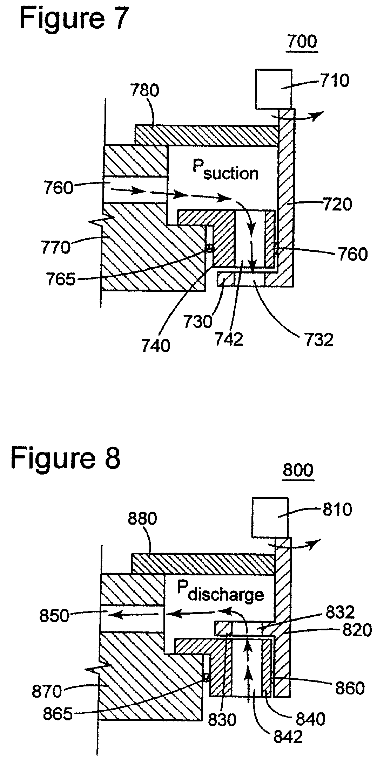

Figure 7 is a schematic diagram of a rotary valve 700 used as a suction valve of a reciprocating compressor. An actuator 710 rotates an actuator stem 720. A rotor 730 of the rotary valve is attached to the actuator stem 720 and switches between a first position and a second position. When the rotor 730 is in the first position, an opening 732 of the rotor 730 overlaps an opening 742 through the stator 740, the rotary valve being opened and allowing fluid to flow from a suction nozzle 750 inside the compressor cylinder. When the rotor 730 is in the second position, the openings 732 and 742 of the rotor 730 and the stator 740, respectively, do not overlap, the valve is closed and the fluid does not flow through the valve. The rotor 730 is located closer to the compression chamber than the stator 740. At least one dynamic seal 760 is provided between the stator 740 and the actuator stem 720, and at least one static seal 765 is provided between the stator 760 and the compressor body 770. The valve assembly in Figure 7 also includes a cover 780 connected to the compressor body 770.

Figure 8 is a schematic diagram of a rotary valve 800 used as a discharge valve of a reciprocating compressor not forming part of the invention but representing background art that is useful for understanding the invention. An actuator 810 rotates an actuator stem 820. A rotor 830 of the rotary valve is attached to the actuator stem 820 and switches between a first position and a second position. When the rotor 830 is in the first position, an opening 832 of the rotor 830 aligns with an opening 842 through the stator 840, the rotary valve is open, allowing fluid to flow from the compressor cylinder towards a discharge nozzle 850.

When the rotor 830 is in the second position, the openings 832 and 842 of the rotor 830 and the stator 840, respectively, are not aligned, and the valve is closed and the fluid is not flowing through the valve. The rotor 830 is located farther from the compression chamber than the stator 840. At least one dynamic seal 860 is provided between the stator 840 and the actuator stem 820, and at least one static seal 865 is provided between the stator 860 and the compressor body 870. The valve assembly in Figure 8 also includes a cover 880 connected to the compressor body 870.

To understand the advantage of arranging the rotary valves in the manner described relative to Figures 7 and 8, a brief overview of an ideal compression cycle is necessary. An ideal compression cycle includes at least four phases: expansion, suction, compression and discharge. When the compressed fluid is evacuated from a compression chamber (e.g., 322 or 324 in Figure 4) at the end of a compression cycle, a small amount of fluid at the delivery pressure remains trapped in a clearance volume (i.e., the minimum volume of the compression chamber). During the expansion phase and the suction phase of the compression cycle, the piston (e.g., 350 in Figure 4) moves to increase the volume of the compression chamber. At the beginning of the expansion phase, the delivery valve closes (the suction valve remaining closed), and then, the pressure of the trapped fluid drops since the volume of the compression chamber available to the fluid increases. The suction phase of the compression cycle begins when the pressure inside the compression chamber decreases to be equal to the suction pressure. During the suction phase, the compression chamber volume and the amount of fluid to be compressed (at the pressure p₁) increase until a maxim volume of the compression chamber is reached. The suction valve then closes.

During the compression and discharge phases of the compression cycle, the piston moves in a direction opposite to the direction of motion during the expansion and compression phases, to decrease the volume of the compression chamber. During the compression phase both the suction and the delivery valves are closed, the pressure of the fluid in the compression chamber increasing (from the suction pressure up to the delivery pressure) because the volume of the compression chamber decreases. The delivery phase of the compression cycle begins when the pressure inside the compression chamber becomes equal to the delivery pressure, triggering the delivery valve to open. During the delivery phase the fluid at the delivery pressure is evacuated from the compression chamber until the minimum (clearance) volume of the compression chamber is reached.

The pressure inside the compression chamber is larger than the suction pressure during all the phases of the compression cycle (expansion, compression and discharge) during which the suction valve is closed. Thereby, during these phases, the pressure difference across the valve causes a force pushing the rotor 730 of the rotary valve used as suction valve towards the stator 740, and, thus, enhancing sealing there-between.

The pressure inside the compression chamber is smaller than the discharge pressure during all the phases of the compression cycle (suction expansion, and compression) in which the discharge valve is closed. Thereby, during these phases, the pressure difference across the valve causes a force pushing the rotor 830 of the rotary valve used as discharge valve towards the stator 840, and, thus, enhancing sealing there-between.

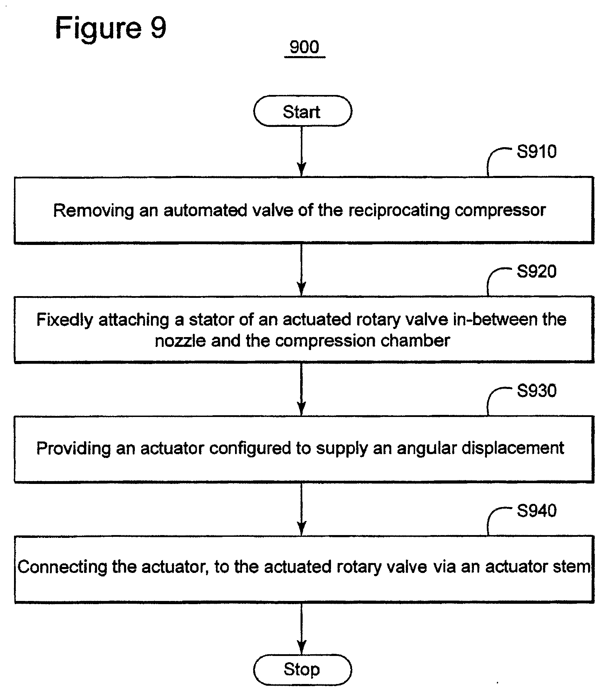

Reciprocating compressors used in oil and gas industry and having automated valves may be retrofitted to use actuated rotary valves with sealing profiles. A flow diagram of a method 900 for retrofitting a reciprocating compressor (e.g., 10) used in oil and gas industry and initially having an automatic valve is illustrated in Figure 9. The method 900 includes removing an automated valve of the reciprocating compressor, at S910. The method 900 further includes mounting an actuated rotary valve in a location from which the automated valve has been removed, at S920. At least one of a rotor and a stator of the actuated rotary valve having a sealing profile extruding from a surface of the rotor or of the stator towards an interface there-between, the sealing profile surrounding a respective one of a stator opening or a rotor opening.

The method 900 also includes providing an actuator configured to supply an angular displacement, at S930, and connecting the actuator to the valve via an actuator stem, at S940. In the method 900, the valve is a suction valve and the rotor is mounted to be closer to the compression chamber than the stator.

The method 900 may further include at least one of (1) providing a seal located and configured to prevent a fluid leak between the stator and a wall of the compression chamber, and (2) providing a radial bushing placed and configured to prevent a fluid leak between the stator and the actuator stem.

The disclosed exemplary embodiments provide actuated rotary valves with sealing profiles between a rotor and a stator thereof, reciprocating compressors using these valves and related methods.

## Claims

1. A reciprocating compressor (300) used in oil and gas industry, comprising:
a compression chamber (322,324);
an actuator (710) configured to supply an angular displacement; and
a valve (700), including
an actuator stem (720) connected to and configured to be rotated by the actuator (710);
a stator (740) having a stator opening (742); and
a rotor (730) having a rotor opening (732), wherein at least one of the rotor (730) and the stator (740) has a sealing profile (515,525) extruding from a surface of the rotor (730) or of the stator (740) towards an interface there-between, the sealing profile (515,525) surrounding a respective one of the rotor opening (732) or the stator opening (742);
wherein the valve is a suction valve, the rotor (730) being located closer to the compression chamber than the stator (740).

2. The reciprocating compressor of claim 1, wherein the respective at least one of the rotor (730) and the stator (740) has a groove on the surface, the sealing profile (515,525) being fixedly attached inside the groove.

3. The reciprocating compressor of claim 1 or claim 2, wherein the sealing profile (515,525) is glued to the respective at least one of the rotor (730) and the stator (740).

4. The reciprocating compressor of any one of the preceding claims, wherein the sealing profile (515,525) is formed as one piece with the respective at least one of the rotor (730) and the stator (740).

5. The reciprocating compressor of any one of the preceding claims, wherein both the rotor (730) and the stator (510) have sealing profiles (515,525) on a respective surface towards the interface there-between.

6. The reciprocating compressor of any one of the preceding claims, wherein:
a stator sealing profile (515) on the stator (740) includes two adjoined closed perimeters, having similar shapes, one of the perimeters surrounding the stator opening (742); and
a rotor sealing profile (525) on the rotor (730) includes a closed perimeter, having similar shape with any one of the two adjoined closed perimeters, the rotor closed perimeter surrounding the rotor opening (732).

7. The reciprocating compressor of any one of the preceding claims, wherein the rotor sealing profile (525) includes seal extensions (629,631,633,635) circumferentially extending sides of the closed perimeter, the seal extensions ramping down to the surface of the rotor.

8. A method for retrofitting a reciprocating compressor used in oil and gas industry, the reciprocating compressor having a compressor chamber and initially having an automatic valve, the method comprising:
removing an automated valve of the reciprocating compressor;
mounting an actuated rotary valve (700) of any one of the preceding claims in a location from which the automated valve has been removed;
providing the actuator (710) configured to supply an angular displacement; and
connecting the actuator (710) to the actuated rotary valve via the actuator stem (720);
wherein the valve is a suction valve and the rotor is located closer to the compression chamber than the stator.

## Patentansprüche

1. Kolbenverdichter (300), der in der Öl- und Gasindustrie verwendet wird, umfassend:
eine Verdichtungskammer (322, 324);
einen Aktuator (710), der ausgestaltet ist, um eine Winkelverschiebung bereitzustellen; und
ein Ventil (700), umfassend
eine Aktuatorstange (720), die mit dem Aktuator (710) verbunden und ausgestaltet ist, um von diesem gedreht zu werden;
einen Stator (740) mit einer Statoröffnung (742); und
einen Rotor (730) mit einer Rotoröffnung (732), wobei mindestens einer von dem Rotor (730) und dem Stator (740) ein Dichtungsprofil (515, 525) aufweist, das von einer Oberfläche des Rotors (730) oder des Stators (740) in Richtung einer Schnittstelle dazwischen hervorsteht, wobei das Dichtungsprofil (515, 525) eine jeweilige von der Rotoröffnung (732) oder der Statoröffnung (742) umgibt;
wobei das Ventil ein Saugventil ist, wobei der Rotor (730) näher an der Verdichtungskammer angeordnet ist als der Stator (740).

2. Kolbenverdichter nach Anspruch 1, wobei der jeweilige mindestens eine von dem Rotor (730) und dem Stator (740) eine Nut auf der Oberfläche aufweist, wobei das Dichtungsprofil (515, 525) fest innerhalb der Nut angebracht ist.

3. Kolbenverdichter nach Anspruch 1 oder Anspruch 2, wobei das Dichtungsprofil (515, 525) an den jeweiligen mindestens einen von dem Rotor (730) und dem Stator (740) geklebt ist.

4. Kolbenverdichter nach einem der vorstehenden Ansprüche, wobei das Dichtungsprofil (515, 525) einstückig mit dem jeweiligen mindestens einen von dem Rotor (730) und dem Stator (740) ausgebildet ist.

5. Kolbenverdichter nach einem der vorstehenden Ansprüche, wobei sowohl der Rotor (730) als auch der Stator (510) Dichtungsprofile (515, 525) auf einer jeweiligen Oberfläche in Richtung der Schnittstelle dazwischen aufweisen.

6. Kolbenverdichter nach einem der vorstehenden Ansprüche, wobei:
ein Statordichtungsprofil (515) auf dem Stator (740) zwei aneinander angrenzende geschlossene Umfänge einschließt, die ähnliche Formen aufweisen, wobei einer der Umfänge die Statoröffnung (742) umgibt; und
ein Rotordichtungsprofil (525) auf dem Rotor (730) einen geschlossenen Umfang einschließt, der eine ähnliche Form wie jeder der zwei aneinander angrenzenden geschlossenen Umfänge aufweist, wobei der geschlossene Rotorumfang die Rotoröffnung (732) umgibt.

7. Kolbenverdichter nach einem der vorstehenden Ansprüche, wobei das Rotordichtungsprofil (525) Dichtungsverlängerungen (629, 631, 633, 635) einschließt, die in Umfangsrichtung Seiten des geschlossenen Umfangs verlängern, wobei die Dichtungsverlängerungen zu der Oberfläche des Rotors hin abflachen.

8. Verfahren zum Nachrüsten eines Kolbenverdichters, der in der Öl- und Gasindustrie verwendet wird, wobei der Kolbenverdichter eine Verdichterkammer aufweist und anfänglich ein automatisches Ventil aufweist, wobei das Verfahren Folgendes umfasst:
Entfernen eines automatisierten Ventils des Kolbenverdichters;
Montieren eines betätigten Drehventils (700) nach einem der vorstehenden Ansprüche an einer Stelle, von der das automatisierte Ventil entfernt wurde;
Bereitstellen des Aktuators (710), der ausgestaltet ist, um eine Winkelverschiebung bereitzustellen; und
Verbinden des Aktuators (710) mit dem betätigten Drehventil über die Aktuatorstange (720);
wobei das Ventil ein Saugventil ist und der Rotor näher an der Verdichtungskammer angeordnet ist als der Stator.

## Revendications

1. Compresseur alternatif (300) utilisé dans l'industrie pétrolière et gazière, comprenant :
une chambre de compression (322, 324) ;
un actionneur (710) configuré pour pourvoir un déplacement angulaire ; et
une vanne (700), incluant
une tige d'actionneur (720) reliée à et configurée pour être tournée par l'actionneur (710) ;
un stator (740) ayant une ouverture de stator (742) ; et
un rotor (730) ayant une ouverture de rotor (732), dans lequel au moins l'un du rotor (730) et du stator (740) a un profil d'étanchéité (515, 525) s'extrudant depuis une surface du rotor (730) ou du stator (740) vers une interface entre eux, le profil d'étanchéité (515, 525) entourant une ouverture respective de l'ouverture de rotor (732) ou de l'ouverture de stator (742) ;
dans lequel la vanne est une vanne d'aspiration, le rotor (730) étant situé plus près de la chambre de compression que le stator (740).

2. Compresseur alternatif selon la revendication 1, dans lequel le respectif au moins un du rotor (730) et du stator (740) a une rainure sur la surface, le profil d'étanchéité (515, 525) étant attaché de manière fixe à l'intérieur de la rainure.

3. Compresseur alternatif selon la revendication 1 ou la revendication 2, dans lequel le profil d'étanchéité (515, 525) est collé au respectif au moins un du rotor (730) et du stator (740).

4. Compresseur alternatif selon l'une quelconque des revendications précédentes, dans lequel le profil d'étanchéité (515, 525) est formé d'une seule pièce avec le respectif au moins un du rotor (730) et du stator (740).

5. Compresseur alternatif selon l'une quelconque des revendications précédentes, dans lequel le rotor (730) et le stator (510) ont tous deux des profils d'étanchéité (515, 525) sur une surface respective vers l'interface entre eux.

6. Compresseur alternatif selon l'une quelconque des revendications précédentes, dans lequel :
un profil d'étanchéité de stator (515) sur le stator (740) inclut deux périmètres fermés attenants, ayant des formes similaires, l'un des périmètres entourant l'ouverture de stator (742) ; et
un profil d'étanchéité de rotor (525) sur le rotor (730) inclut un périmètre fermé, ayant une forme similaire à l'un quelconque des deux périmètres fermés attenants, le périmètre fermé de rotor entourant l'ouverture de rotor (732).

7. Compresseur alternatif selon l'une quelconque des revendications précédentes, dans lequel le profil d'étanchéité de rotor (525) inclut des extensions d'étanchéité (629, 631, 633, 635) s'étendant circonférentiellement sur des côtés du périmètre fermé, les extensions d'étanchéité descendant vers la surface du rotor.

8. Procédé de rétrofitage d'un compresseur alternatif utilisé dans l'industrie pétrolière et gazière, le compresseur alternatif ayant une chambre de compresseur et ayant initialement une vanne automatique, le procédé comprenant :
retirer une vanne automatisée du compresseur alternatif ;
monter un robinet rotatif actionné (700) selon l'une quelconque des revendications précédentes à un endroit d'où la vanne automatisée a été retirée ;
fournir l'actionneur (710) configuré pour pourvoir un déplacement angulaire ; et
relier l'actionneur (710) au robinet rotatif actionné par l'intermédiaire de la tige d'actionneur (720) ;
dans lequel la vanne est une vanne d'aspiration et le rotor est situé plus près de la chambre de compression que le stator.
